# EUROPÄISCHE PATENTSCHRIFT

(11) **EP 3 367 129 B1**
(45) Veröffentlichungstag und Bekanntmachung des Hinweises auf die Patenterteilung: **15.05.2019**
(21) Anmeldenummer: 18151967.9
(22) Anmeldetag: 16.01.2018
(51) Int. Cl.: G01S 17/42, G01S 7/481, G01S 17/88

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 23.02.2017 DE 102017103791
(43) Veröffentlichungstag der Anmeldung: 29.08.2018
(73) Patentinhaber: Sick AG, 79183 Waldkirch (DE)
(72) Erfinder: Nübling, Ralf Ulrich, 79211 Denzlingen (DE); Pastor, Sebastian, 79194 Gundelfingen (DE)

(56) Entgegenhaltungen:
- AT-B1- 513 402
- DE-B3-102015 118 258
- DE-U1-202014 101 940

## Beschreibung

Die Erfindung betrifft einen optoelektronischen Sensor, insbesondere einen Laserscanner, und ein Verfahren zur Erfassung von Objekten nach dem Oberbegriff von Anspruch 1 beziehungsweise 15.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Laserscanner werden nicht nur für allgemeine Messaufgaben, sondern auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner müssen besonders zuverlässig arbeiten und deshalb hohen Sicherheitsanforderungen entsprechen, beispielsweise der Norm EN13849 für Maschinensicherheit und der Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe.

Um wie oben beschrieben eine zweidimensionale Ebene messtechnisch eindeutig erfassen zu können, muss die jeweilige Winkelstellung der Ablenkeinheit bekannt sein. Herkömmlich wird dazu eine Encoderscheibe mit regelmäßigen Öffnungen eingesetzt. Eine Gabellichtschranke strahlt durch die Öffnungen der drehenden Encoderscheibe, und durch Bestimmung der Anzahl von Strahlunterbrechungen pro Zeit wird eine Drehgeschwindigkeit beziehungsweise Winkelposition berechnet. Die Winkelposition wird meist inkrementell binär abgenommen, und einmal je Umdrehung erfolgt eine Referenz auf eine entsprechende Markierung. Auch Absolutverfahren sind bekannt, werden aber aus Kostengründen in Laserscannern üblicherweise nicht eingesetzt.

Die Winkelmesseinheit mit ihren Zusatzbauteilen wie Codescheibe und Gabellichtschranke erhöht die Herstellkosten und benötigt Bauraum samt Montagemöglichkeiten. Einzelne Öffnungen der Codescheibe können im Betrieb durch Fremdpartikel oder Staub verstopfen, was zu Wartungsbedarf oder sogar Fehlmessungen bis hin zu Ausfällen führt. Die Gabellichtschranke ist anfällig gegenüber Fremdlicht, und es ist dafür zu sorgen, dass es kein störendes Übersprechen zwischen dem Licht für die Abstandsmessung und dem Licht für die Winkelbestimmung gibt.

Die DE 10 2015 105 264 A1 offenbart eine Transmissionsüberwachung einer Frontscheibe eines Laserscanners mittels Testlicht auf einen Testlichtpfad durch die Frontscheibe. Dabei rotiert ein Testlichtreflektor auf der Ablenkeinheit mit, um die Frontscheibe mit dem Testlichtpfad nicht nur punktuell, sondern im Laufe der Drehung über einen größeren Bereich überwachen zu können. Trotzdem sind mehrere Paare von Testlichtsendern und Testlichtempfängern über den Umfang der Frontscheibe verteilt, um sie überall prüfen zu können. Die DE 10 2015 105 264 A1 schlägt vor, die Winkelstellung anhand der Identität des jeweiligen Testlichtempfängers festzustellen, der momentan über den mitdrehenden Testlichtreflektor Licht empfängt, und möglicherweise auch aus dem Auftreffort des Testlichts auf diesem Testlichtempfänger. Auf diese Weise wird aber keine hohe Winkelauflösung erreicht. Außerdem sehen nicht alle Laserscanner überhaupt eine Frontscheibenüberwachung vor, und für die Bestimmung der Winkelposition allein wären mehrere Testpfade und ein mitdrehender Reflektor sogar noch aufwändiger als ein herkömmlicher Winkelencoder.

Aus der DE 20 2014 101 940 U1 ist ein Laserscanner bekannt, der seine jeweilige Winkelstellung über eine Winkelmesseinheit bestimmt. Es besteht dabei die Möglichkeit, den Winkelursprung, also die Konvention des Winkels 0°, durch Anbringen eines optischen Markers an der gewünschten Position auf der Frontscheibe neu festzulegen.

Die AT 513 402 B1 offenbart einen Laserscanner, der Abstände mit einem Pulsverfahren misst. Um den Einfluss interner Störreflexionen insbesondere von einem Gehäuseaustrittsfenster zu kompensieren, wird diese Störreflexion als Referenz gespeichert und im Betrieb vom Empfangssignal subtrahiert. In einer Ausführungsform mit flachem Austrittsfenster erzeugt der Lasermessstrahl wegen der unterschiedlichen Durchtrittswinkel unterschiedliche Störreflexionen, und deshalb wird für jede auftretende oder mögliche Senderichtung ein Referenz-Störsignal gespeichert.

Es ist deshalb Aufgabe der Erfindung, in einem gattungsgemäßen Sensor für eine verbesserte Bestimmung der Winkelposition zu sorgen.

Diese Aufgabe wird durch einen optoelektronischen Sensor, insbesondere einen Laserscanner, und ein Verfahren zur Erfassung von Objekten nach Anspruch 1 beziehungsweise 15 gelöst. Der Sensor weist eine bewegliche Ablenkeinheit auf, also beispielsweise einen rotierenden Drehspiegel oder einen rotierenden Optikkopf mit Lichtsender und Empfänger, und tastet auf diese Weise mit einem Lichtstrahl periodisch eine Überwachungsebene ab. Bei zusätzlicher Verkippung der Ablenkeinheit in einer zweiten Achse wird der Überwachungsbereich zu einem dreidimensionalen Raumbereich erweitert. Ein aus dem zurückkehrenden Lichtstrahl erzeugtes Empfangssignal wird ausgewertet, um zu erkennen, ob ein Objekt angetastet wurde. Dabei ist der Sensor insbesondere als Entfernungsmesser ausgebildet, indem die Lichtlaufzeit zwischen Aussenden und Empfang des Lichtstrahls und daraus die Entfernung zu dem Objekt bestimmt wird. Eine Winkelmesseinheit bestimmt die jeweilige Winkelposition der Erfassung.

Die Erfindung geht nun von dem Grundgedanken aus, in der Winkelmesseinheit die herkömmliche Encoderscheibe samt Gabellichtschranke zu ersetzen. Dazu wird Streulicht genutzt, welches der ausgesandte Lichtstrahl in dem Laserscanner verursacht. Dieses Streulicht ist an sich ein Störeffekt. Die Erfindung macht sich zunutze, dass Streulicht verstärkt in der jeweils aktuellen Scan- oder Winkelrichtung auftritt, und wertet das Streulicht so auf die gesuchte Winkelinformation hin aus. Dazu wird das Licht derselben Lichtquelle genutzt wie für die eigentliche Messung, eine zusätzliche Lichtquelle ist nicht erforderlich. Allerding kann der Lichtsender messbedingt mehrere Lichtquellen aufweisen, beispielsweise um mit verschiedenen Modulationen oder in verschiedenen Spektren zu messen oder einfach um mehr optische Leistung zu erzeugen. Für die Winkelbestimmung wird jedoch auch dann kein zusätzliches Licht erzeugt, sondern der für die Messung ausgesandte Lichtstrahl beziehungsweise dessen Streulicht für eine weitere Funktion verwendet.

Die Erfindung hat den Vorteil, dass die Winkelmessung deutlich einfacher wird und mit weniger Bauteilen auskommt, beispielsweise ohne spezielle Zusatzelemente wie eine Gabellichtschranke oder Codescheibe. Stattdessen werden weitgehend oder ausschließlich ohnehin vorhandene Bauteile des Sensors genutzt. Damit werden Kosten eingespart und Vorteile bei der Baugröße erzielt. Außerdem sinkt das Risiko eines Bauteilausfalls.

Der Sensor weist vorzugsweise einen Streulichtempfänger zum Erzeugen eines Streulichtsignals auf. Dabei handelt es sich um ein eigenes Bauteil oder alternativ nur um eine Doppelfunktion des für die Messung schon vorhandenen Lichtempfängers. Ein eigenes Bauteil lässt sich besser für Streulicht auslegen und anordnen, und es wird eine Überlagerung zwischen Mess- und Streulichtsignal vermieden. Umgekehrt hat eine Doppelverwendung des Lichtempfängers den Vorzug, dass ein weiteres Bauteil samt erforderlichem Bauraum und Montageschritt eingespart wird. Das jeweils erzeugte Streulichtsignal ist ein dem empfangenen Streulicht entsprechendes elektronisches Signal, welches der Auswertung in der Winkelmesseinheit zugrunde liegt.

Der Streulichtempfänger vollzieht bevorzugt die Bewegung der Ablenkeinheit nicht mit. Dadurch bekommt der Streulichteinfall eine ausgeprägte Winkelabhängigkeit, die in der Winkelmesseinheit ausgewertet werden kann.

Die Winkelmesseinheit ist bevorzugt dafür ausgebildet, die Winkelstellung aus einem periodischen Verlauf des Streulichts zu bestimmen. Der Pegel des Streulichts variiert periodisch mit der Bewegung der Ablenkeinheit. Deshalb kann die Winkelmesseinheit dem jeweiligen Pegel eine Winkelposition zuordnen.

Die Winkelmesseinheit ist bevorzugt dafür ausgebildet, den periodischen Verlauf des Streulichts als Referenz einzulernen. Das kann ab Werk, bei der Inbetriebnahme und/oder zum Nachführen im Betrieb geschehen. Beispielsweise wird das Streulichtsignal bei mehreren Umdrehungen aufgezeichnet und gemittelt. Damit steht eine Referenz für die Zuordnung zwischen Pegel des Streulichts und der Winkelposition zur Verfügung.

Die Winkelmesseinheit ist bevorzugt dafür ausgebildet, eine Winkelstellung aus einem Charakteristikum, insbesondere Extremum oder Nulldurchgang des Streulichts zu bestimmen. Da ein Lichtsignal nie einen negativen Pegel hat, ist mit Nulldurchgang ein mittlerer Pegel gemeint. Bei einem Sinus ist das zugleich die Position der Wendepunkte. Charakteristika wie Nullstellen, Extrema, Wendepunkte und dergleichen sind sehr robust zu erkennen und daher verlässlich einer Winkelstellung zuzuordnen. Besonders bevorzugt wird mit einem solchen Charakteristikum eine herausgehobene Winkelstellung wie 0°, 180° oder 90° verknüpft, was aber letztlich eine nicht bindende Konvention ist. Jedenfalls eignen sich solche Charakteristika als Referenzpunkte, um einen größeren Schlupf in der Bestimmung der Winkelposition über mehrere Umdrehungen zu vermeiden.

Der Sensor weist bevorzugt eine Frontscheibe auf, die das Streulicht über nicht in den Überwachungsbereich transmittierte Anteile des ausgesandten Lichtstrahls erzeugt. Das in der Winkelmesseinheit ausgewertete Streulicht entsteht also zumindest zu einem wesentlichen Anteil an der Frontscheibe. Die Frontscheibe wird häufig gegenüber dem ausgesandten Lichtstrahl schräg gestellt, um eine Eigenblendung zu verhindern. Dabei entsteht ein Reflex, der zu dem ausgewerteten Streulicht beitragen kann. Das ausgewertete Streulicht kann aber auch an anderen Bauteilen im Sendepfad entstehen, etwa an einem Drehspiegel, einer Sendelinse oder einem Sendetubus. Dabei können sich unterschiedliche Streulichtanteile auch ergänzen.

In dem Lichtpfad des ausgesandten Lichtstrahls ist bevorzugt eine Streulichtstruktur zur Erhöhung und/oder Umlenkung von Streulicht angeordnet. Die Struktur kann als aufgerauter Bereich oder als zusätzliches optisches Element vorgesehen sein. Letzteres kann eine eher zufällige Form annehmen, wie durch Vorsehen von ein wenig zusätzlichem transparentem Kunststoffmaterial. Gezielte optische Flächen sind aber insbesondere im Rahmen eine Modifikation eines Spritzgusses auch sehr einfach möglich. Auf diese Weise wird stärkeres, besser erfassbares und/oder besser auf einen Streulichtempfänger ausgerichtetes Streulicht erzeugt.

Die Streulichtstruktur ist bevorzugt an einer Frontscheibe des Sensors angeordnet. Dort ist das Anbringen solcher Strukturen besonders einfach möglich, und die Geometrie des Laserscanners lässt dann auch besonders geeignete Streulichtwege zu. Dennoch kann die Streulichtstruktur auch an anderen Elementen im Sendepfad angebracht werden, wie an einem Drehspiegel, einer Sendelinse oder einem Sendetubus. Insbesondere sind auch einander ergänzende Streulichtstrukturen denkbar. Als Beispiel sei ein speziell gestalteter Teilbereich einer Sendelinse genannt, der für einen größeren Sendelichtanteil an einer Streulichtstruktur der Frontscheibe sorgt.

Die Streulichtstruktur bildet bevorzugt mindestens eine Winkelcodierung in einer der Winkelmesseinheit bekannten Winkelstellung. Eine solche Streulichtstruktur sorgt nicht nur allgemein für ein besser erfassbares Streulicht. Vielmehr geschieht dies gezielt an bekannten Winkelpositionen. Beispielsweise schlägt sich das in Pegelspitzen des Streulichtsignals nieder, anhand derer die Winkelmesseinheit die zugeordneten Winkelstellungen erkennt. Damit kann sich die Winkelmesseinheit einmal oder mehrmals je Umdrehung auf eine besonders genau bekannte Winkelstellung referenzieren.

Vorzugsweise ist eine Vielzahl von Streulichtstrukturen als Winkelcodierungen vorgesehen. Dies führt den Gedanken einzelner Referenzwinkelpositionen weiter. Beispielsweise bilden die Streulichtstrukturen regelmäßige Winkelinkremente, womit die Winkelmesseinheit anhand des Streulichts ähnlich einem optischen Winkelencoder arbeiten kann. Die durch die Streulichtstrukturen entstehenden Pegelspitzen überlagern vorzugsweise einen periodischen Verlauf des Streulichts durch die Bewegung der Ablenkeinheit. Damit wird dann bevorzugt sogar auch eine Art absolute Winkelcodierung erreicht.

Die Winkelmesseinheit weist bevorzugt einen zusätzlichen Winkelencoder auf. Damit ist ein herkömmlicher Winkelencoder gemeint, beispielsweise aus einer Codescheibe und einer Gabellichtschranke. Ein solcher Sensor misst seine Winkelstellung diversitär und wird dadurch besonders zuverlässig. Die doppelte Bestimmung der Winkelstellung aus dem Streulicht und mit einem herkömmlichen Winkelencoder kann auch zu einer Verbesserung der Winkelauflösung genutzt werden.

Der Sensor weist bevorzugt eine Frontscheibe auf, wobei die Auswertungseinheit dafür ausgebildet ist, aus dem Streulicht eine Verschmutzung der Frontscheibe zu erkennen. Das Streulicht wird hier für eine zweite Funktion zusätzlich zur Bestimmung der Winkelposition ausgewertet. Durch eine Verschmutzung der Frontscheibe ändert sich das Streuverhalten. Daran wird die Verschmutzung erkannt, sei es binär nach einer Schwellwertbetrachtung oder graduell in einem quantitativen Verschmutzungsmaß. Die Verschmutzungsinformation steht dabei falls gewünscht sogar mit einer sehr hohen Winkelauflösung zur Verfügung. Eine solche Auswertung kann unterstellen, dass die Ablenkeinheit sich reproduzierbar bewegt. Derartige Annahmen können notwendig werden, um zwischen einer Änderung des Streulichtpegels aufgrund der Winkelstellung und einer Verschmutzung der Frontscheibe zu unterscheiden.

Der Sensor ist vorzugsweise als Sicherheitssensor ausgebildet und weist einen Sicherheitsausgang auf, wobei die Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Ein Sicherheitssensor ist ein sicherer Sensor im Sinne einer Sicherheitsnorm wie einleitend beschrieben und kann deshalb insbesondere zum Personenschutz an Gefahrenquellen eingesetzt werden. Insbesondere Maßnahmen wie eine diversitäre Winkelbestimmung oder eine Verschmutzungsmessung können zur Einhaltung dieser Normen beitragen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch einen Laserscanner in einer Ausführungsform mit Drehspiegel;
- Fig. 2: einen beispielhaften Verlauf des Streulichtpegels in Abhängigkeit von der Winkelstellung;
- Fig. 3: eine Darstellung einer möglichen Streulichtstruktur auf einer Frontscheibe;
- Fig. 4: eine Darstellung einer weiteren möglichen Streulichtstruktur auf einer Frontscheibe;
- Fig. 5: eine Darstellung einer Abwicklung einer Frontscheibe mit als inkrementelle Winkelcodierung aufgebrachten Streulichtstrukturen;
- Fig. 6: einen beispielhaften Verlauf des Streulichtpegels in Abhängigkeit von der Winkelstellung im Falle von Streulichtstrukturen wie in Figur 5; und
- Fig. 7: eine schematische Schnittdarstellung durch einen Laserscanner in einer weiteren Ausführungsform mit rotierender Abtasteinheit.

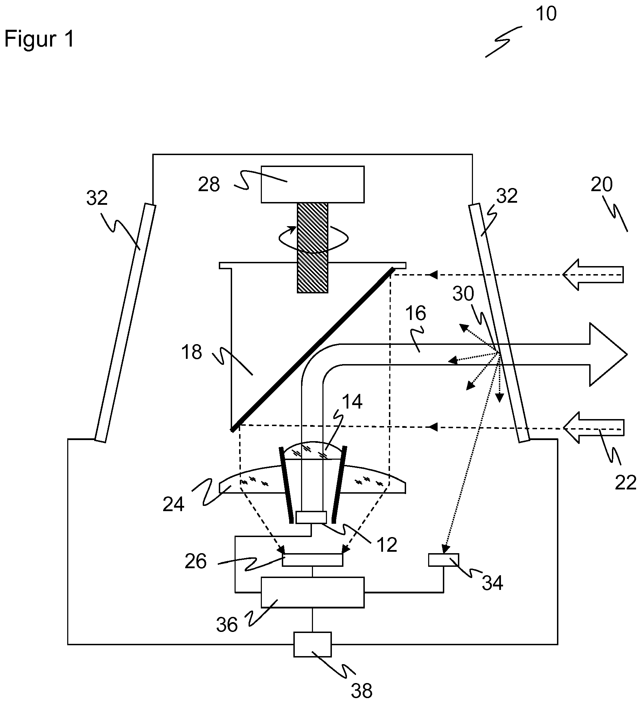

Fig. 1 zeigt eine schematische Schnittdarstellung durch einen erfindungsgemäßen Sensor, der als Laserscanner 10 ausgebildet ist. Ein Lichtsender 12, beispielsweise mit einer Laserlichtquelle im infraroten oder einem anderen Spektrum, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Laserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet und rotiert durch Antrieb eines Motors 28 kontinuierlich. Der von dem Lichtsender 12 erzeugte Sendelichtstrahl 16 überstreicht somit den durch die Rotationsbewegung erzeugten Überwachungsbereich 20. Die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Laserscanner auch in einer Autokollimationsanordnung bekannt.

Wird nun von dem Lichtempfänger 26 remittiertes Licht 22 aus dem Überwachungsbereich 20 empfangen, so kann aus der Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Laserscanner 10 geschlossen.

Die Bestimmung der Winkelstellung der Ablenkeinheit 18 erfolgt mit Hilfe von Streulicht 30, welches der Sendelichtstrahl 16 an einer Frontscheibe 32 des Laserscanners 10 erzeugt. Dazu ist in dem Laserscanner 10 ein ortsfester Streulichtempfänger 34 angeordnet, welcher das Streulicht 30 empfängt und daraus ein Streulichtsignal erzeugt. Die ortsfeste Anordnung bedeutet, dass sich die Ablenkeinheit 18 und damit der Sendelichtstrahl 16 gegenüber dem Streulichtempfänger 34 in periodischer Bewegung befinden. Deshalb hängt der erfasste Streulichtpegel von der Winkelstellung der Ablenkeinheit 18 ab, und diese Abhängigkeit wird genutzt, um die Winkelstellung aus dem Streulicht zu messen.

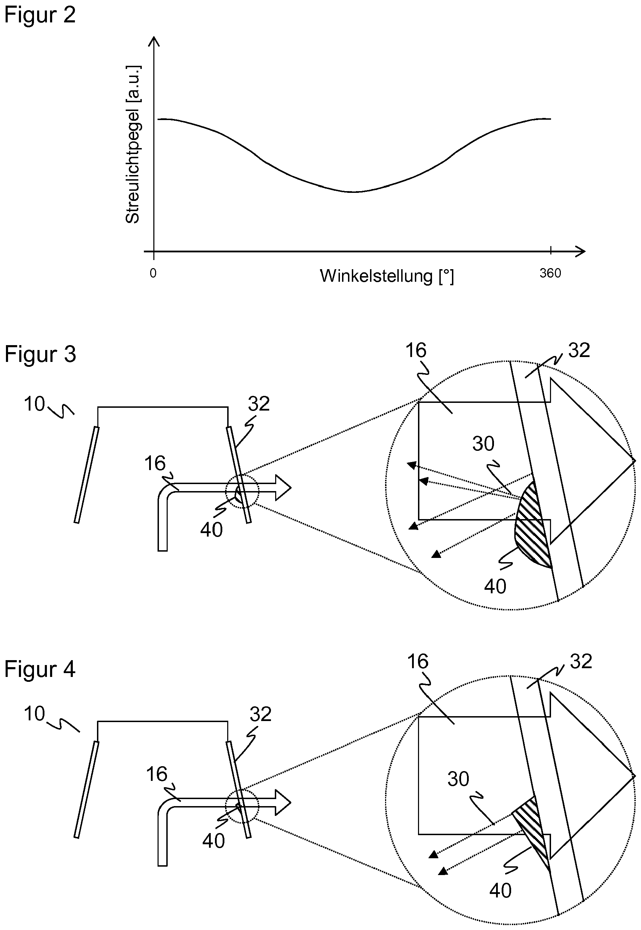

Figur 2 zeigt einen Verlauf des Streulichtpegels in Abhängigkeit von der Winkelstellung der Ablenkeinheit 18, wie er beispielhaft von dem Streulichtempfänger 34 gemessen sein könnte. Der Verlauf ist periodisch, in diesem Beispiel ähnlich einer Sinusschwingung. Auf den genauen Verlauf kommt es nicht an. Qualitativ wird sich jedenfalls ein maximaler Streulichtpegel in der Drehstellung gemäß Figur 1 ergeben, in denen das Streulicht 30 einen kurzen, direkten Weg zu dem Streulichtempfänger 34 nehmen kann. Das ist mit 0° beziehungsweise 360° bezeichnet, wobei dies natürlich reine veränderbare Konvention ist. Bei einer mittleren Winkelstellung von 180° dagegen würde das Streulicht 30 einen deutlich weiteren Weg nehmen, so dass sich wegen dessen Divergenz ein deutlich geringerer minimaler Streulichtpegel ergibt, wobei dieser Einbruch durch Abschattungseffekte noch verstärkt wird.

Der typische Verlauf des Streulichtpegels, der in Figur 2 beispielhaft gezeigt ist, kann in dem Laserscanner 10 als Referenz hinterlegt sein. Dabei kann eine solche Referenz pro Geräteklasse vorgegeben oder individuell, beispielsweise anhand von Mittelungen bei vielfachen Umdrehungen der Ablenkeinheit, eingelernt werden. Dann kann aus dem Streulichtpegel auf die Winkelstellung geschlossen werden. Eine Einbeziehung einer Umgebung des Streulichtpegels in diese Auswertung führt zu präziseren Ergebnissen. Insbesondere sind Maxima, Wendepunkte oder ähnliche Charakteristika besonders robust bestimmbar.

Außerdem wird vorzugsweise der Streulichtempfänger 34 so angeordnet, dass er dort über eine Umdrehung der Ablenkeinheit 18 eine möglichst große beziehungsweise eindeutige Signaldynamik erfährt. Dadurch entsteht ein besonders gut auswertbarer Verlauf des Streulichtpegels.

Zurück zu Figur 1, erfolgen die erläuterten Auswertungen des Streulichts und des remittierten Lichts 22 in einer Auswertungseinheit 36, die dafür mit dem Lichtsender 12, dem Lichtempfänger 26, dem Motor 28 und dem Streulichtempfänger 34 verbunden ist. Auch wenn hier die Auswertungseinheit 36 zugleich als Winkelmesseinheit fungiert, kann in anderen Ausführungsformen die Winkelmesseinheit als separater Funktionsblock auf einem Baustein der Auswertungseinheit 36 oder sogar auf einem eigenen Baustein implementiert sein.

Somit stehen über den Winkel und die Entfernung zweidimensionale Polarkoordinaten aller Objekte in dem Überwachungsbereich 20 zur Verfügung. In sicherheitstechnischer Anwendung prüft die Auswertungseinheit 36, ob ein unzulässiges Objekt in einen innerhalb des Überwachungsbereichs 20 festgelegten Schutzbereich eingreift. Ist das der Fall, wird über einen Sicherheitsausgang 38 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner. In anderen Ausführungsformen ist anstelle des Sicherheitsausgangs 38 oder zusätzlich dazu eine Schnittstelle zur Ausgabe von Messdaten oder beispielsweise zum Parametrieren des Laserscanners 10 vorgesehen.

In Figur 1 wird das Streulicht von einem separaten Streulichtempfänger 34 gemessen, Das hat Vorteile, weil so die Bestimmung der Winkelstellung von der eigentlichen Messung entkoppelt wird. Denkbar ist dennoch, das Streulicht 30 auch in dem Lichtempfänger 26 auszuwerten. Es trägt zu dem Empfangssignal des Lichtempfängers 26 mit einem sehr regelmäßigen und vorhersagbaren Anteil bei, so dass sich Messsignal und Streulichtsignal durch entsprechende Auswertungen trennen lassen. Damit kann ein weiteres Bauteil eingespart werden, die Winkelmessung erfordert dann gar keine eigenen Bauteile, sondern lediglich zusätzliche Auswertungsfunktionalität.

Aus dem Streulicht 30 können zusätzlich zu der beschriebenen Erfassung der Winkelstellung auch weitere Informationen gewonnen werden. Wenn die Frontscheibe 32 beschädigt wird oder Verunreinigungen aufweist, so führt dies zu lokalen Änderungen des Streulichts 30 und damit spürbaren Änderungen des in Figur 2 beispielhaft gezeigten Verlaufs des Streulichtpegels, die von der Auswertungseinheit 36 erkannt werden können. Auf diese Weise kann auch die zusätzliche Funktionalität einer Überwachung der Frontscheibe 32 auf ihre Transmissionseigenschaften erreicht werden, und zwar vorzugsweise erneut ohne zusätzliche Bauteile allein durch erweiterte Auswertungsfunktionalität.

In der Ausführungsform gemäß Figur 1 wird Streulicht 30 genutzt, das an der Frontscheibe 32 ohnehin entsteht. Es ist denkbar, gezielt mehr Streulicht 30 zu erzeugen oder das Streulicht 30 verstärkt auf den Streulichtempfänger 34 zu führen, um eine noch robustere, zuverlässigere und genauere Bestimmung der Winkelstellung zu ermöglichen.

Figur 3 zeigt ein Beispiel einer Streulichtstruktur 40, die dafür optional an der Frontscheibe 32 angebracht werden kann. Links ist der gegenüber Figur 1 sehr vereinfachte obere Teil des Laserscanners 10 nur mit Sendelichtstrahl 16 und Frontscheibe 32 und rechts eine Ausschnittvergrößerung des Bereichs mit der Streulichtstruktur 40 dargestellt. Eine Streulichtstruktur 40 kann sehr klein sein und praktisch nur auf den Sendelichtstrahl 16 einwirken, so dass ihre wirksame Fläche gegenüber dem Durchtrittsbereich des remittierten Lichts 22 vernachlässigbar wird. Die Streulichtstruktur 40 wirkt ungerichtet, erzeugt also einfach zusätzliche Anteile des Streulichts 30, um überall und damit auch bei dem Streulichtempfänger 34 den Streulichtpegel zu erhöhen. Dafür würde auch ein Aufrauen genügen.

Figur 4 zeigt ein weiteres Beispiel einer Streulichtstruktur 40. Im Unterschied zu Figur 3 weist die Streulichtstruktur eine gerichtete Fläche auf, um das Streulicht 30 gezielt zu dem Streulichtempfänger 34 zu lenken. Dadurch kann zugleich das Streulicht 30, das insgesamt in dem Laserscanner 10 entsteht und an sich ein Störeffekt ist, gering gehalten und das von dem Streulichtempfänger 34 erzeugte Streulichtsignal verstärkt werden.

Es ist sehr einfach, Streulichtstrukturen 40 wie in Figur 3 oder 4 an der Frontscheibe 32 herzustellen. Sie können beispielsweise im Spritzgusswerkzeug vorgesehen sein und erzeugen dann keinerlei Zusatzkosten und benötigen weder gesonderte Montageschritte noch Bauraum. Die Streulichtstrukturen 40 sind beispielhaft an der Frontscheibe 32 vorgesehen, können aber ebenso an anderen mitdrehenden Elementen im Sendepfad des Sendelichtstrahls 16 angeordnet werden, etwa an der Ablenkeinheit 18 oder an einem nicht gezeigten optionalen Sendetubus, der sich mitdreht und den Sendepfad zur Vermeidung von optischem Übersprechen in den Empfangspfad abschirmt. Dabei sind auch andere Streulichtstrukturen denkbar, die transmissiv statt reflexiv wirken. Bei Laserscannern 10, die statt eines Drehspiegels als Ablenkeinheit 18 einen drehenden Messkopf verwenden, kommen sogar noch mehr mitdrehende Elemente wie die Sendeoptik 14 für die Anbringung von Streulichtstrukturen 40 in Betracht.

Eine Streulichtstruktur 40 kann sich über den gesamten Umfang erstrecken und erhöht dann überall den Streulichtpegel. Vorzugsweise wirkt sie aber in unterschiedlichen Winkelstellungen unterschiedlich, beispielsweise gar nicht in einer um 180° gegenüber Figur 1 verdrehten Stellung, um die in Figur 2 gezeigte Winkelabhängigkeit des Streulichtpegels noch zu unterstützten. Das ist durch winkelabhängig unterschiedliche Größen, Dicken, Ausrichtungen der Flächen, Materialen und ähnliche geometrischen oder sonstigen Eigenschaften der Streulichtstrukturen 40 erreichbar.

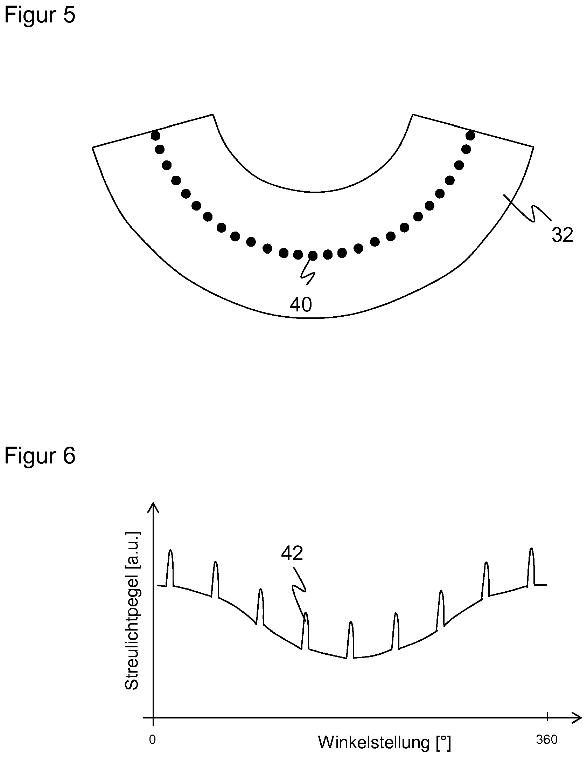

Dabei ist sogar eine echte Winkelcodierung durch Streulichtstrukturen 40 denkbar. Figur 5 zeigt beispielhaft eine Abwicklung einer kegelstumpfförmigen Frontscheibe 32 mit hier in regelmäßigen Abständen verteilten Streulichtstrukturen 40. Selbstverständlich sind andere Winkelcodierungen auch denkbar.

Figur 6 zeigt einen Signalpegelverlauf in Abhängigkeit von der Winkelstellung ähnlich Figur 2, jedoch nun für den Fall von als Winkelcodierung angebrachten Streulichtstrukturen 40. Dabei entsprechen Anzahl und Winkelabstand nicht der Figur 5, um zu unterstreichen, dass die dort gezeigte Anordnung von Streulichtstrukturen 40 rein beispielhaft ist.

Aufgrund der Streulichtstrukturen 40 entstehen Pegelspitzen 42. Diese Pegelspitzen 42 können sehr einfach erkannt und in der Auswertung als inkrementelle Winkelcodierung genutzt werden. Der Verlauf des Streulichtpegels enthält aber mehr Information, denn die Pegelspitzen überlagern den periodischen Verlauf, der auch schon in Figur 2 gezeigt war. Damit ist sogar eine quasi-absolute Bestimmung der jeweiligen Winkelstellung jedenfalls nach Einbeziehung und Auswertung von Umgebungen der Pegelspitze 42 möglich. Jedenfalls geben die Pegelspitzen 42 dem Verlauf des Streulichtpegels gut erfassbare zusätzliche Struktur und verbessern damit die Auswertung. Ähnlich wie auf der Frontscheibe 32 angeordnete Streulichtstrukturen 40, die als Winkelcodierung fungieren, kann auch eine zusätzliche Codescheibe angebracht werden, um das Streulicht 30 zu modulieren.

Weiterhin ist auch denkbar, einen herkömmlichen Winkelencoder etwa auf Basis von Codescheibe und Gabellichtschranke zu ergänzen, um eine diversitäre Bestimmung der Winkelstellung zu ermöglichen.

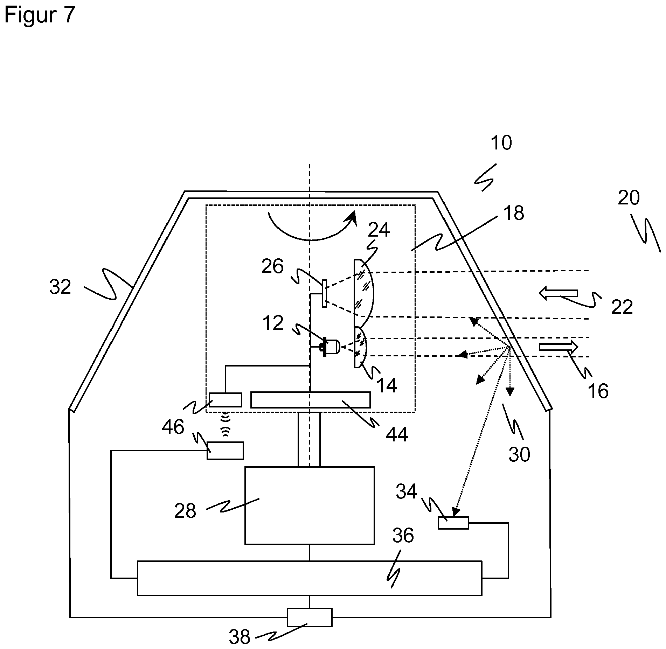

Figur 7 zeigt eine weitere Ausführungsform des Laserscanners 10. Die Ablenkeinheit 18 ist hier im Gegensatz zu der unter Bezugnahme auf Figur 1 erläuterten Ausführungsform kein Drehspiegel, sondern ein rotierender Messkopf, also eine Abtasteinheit, in der sich Lichtsender 12 und Lichtempfänger 26 samt Optiken 14, 24 mitdrehen. Die Auswertungsfunktionalität kann praktisch beliebig zwischen der rotierenden Abtasteinheit, beispielsweise einer dort angeordneten Leiterkarte 44, und der ruhenden Auswertungseinheit 36 verteilt werden. Für eine Datenübertragung zumindest in der Richtung hin zu der Auswertungseinheit 36, vorzugsweise auch bidirektional, ist eine drahtlose Kommunikationsschnittstelle 46 vorgesehen. Dabei kann es sich um jede bekannte Technologie wie eine optische, kapazitive, induktive oder Funkverbindung handeln. Auch eine drahtgebundene Alternative über Schleifkontakte ist denkbar. Entsprechendes gilt für eine Versorgung der mitbewegten Elemente in der Ablenkeinheit 18.

Der Streulichtempfänger 34 ist ortsfest im ruhenden Teil des Laserscanners 10 untergebracht, vollzieht also die Drehbewegung der Ablenkeinheit 18 nicht mit. Daher wird wie in den anderen Ausführungsformen ein Streulichtsignal erzeugt, welches mit der Winkelstellung der Ablenkeinheit 18 variiert. Damit lassen sich die bisher geschilderten Auswertungen und Ausgestaltungsmöglichkeiten auch auf einen Laserscanner 10 mit rotierender Abtasteinheit übertragen.

## Patentansprüche

1. Optoelektronischer Sensor (10), insbesondere Laserscanner, zur Erfassung von Objekten in einem Überwachungsbereich (20) mit einem Lichtsender (12) zum Aussenden eines Lichtstrahls (16), einer beweglichen Ablenkeinheit (18) zur periodischen Ablenkung des Lichtstrahls (16) in den Überwachungsbereich (20), einer Winkelmesseinheit (34, 36) zur Bestimmung einer Winkelstellung der Ablenkeinheit (18), einem Lichtempfänger (26) zum Erzeugen eines Empfangssignals aus dem von den Objekten remittierten oder reflektierten Lichtstrahl (22) und einer Auswertungseinheit (36), die dafür ausgebildet ist, das Empfangssignal zur Erfassung der Objekte auszuwerten
**dadurch gekennzeichnet,**
**dass** die Winkelmesseinheit (34, 36) dafür ausgebildet ist, die jeweilige Winkelstellung der Erfassung durch Auswertung von Streulicht (30) zu bestimmen, welches der ausgesandte Lichtstrahl (16) in dem Sensor (10) erzeugt.

2. Sensor (10) nach Anspruch 1,
der einen Streulichtempfänger (34) zum Erzeugen eines Streulichtsignals aufweist.

3. Sensor (10) nach Anspruch 2,
wobei der Streulichtempfänger (34) die Bewegung der Ablenkeinheit (18) nicht mitvollzieht.

4. Sensor (10) nach einem der vorhergehenden Ansprüche,
wobei die Winkelmesseinheit (34, 36) dafür ausgebildet ist, die Winkelstellung aus einem periodischen Verlauf des Streulichts (30) zu bestimmen.

5. Sensor (10) nach Anspruch 4,
wobei die Winkelmesseinheit (34, 36) dafür ausgebildet ist, den periodischen Verlauf des Streulichts (30) als Referenz einzulernen.

6. Sensor (10) nach einem der vorhergehenden Ansprüche,
wobei die Winkelmesseinheit (34, 36) dafür ausgebildet ist, eine Winkelstellung aus einem Charakteristikum, insbesondere Extremum oder Nulldurchgang des Streulichts (30) zu bestimmen.

7. Sensor (10) nach einem der vorhergehenden Ansprüche,
der eine Frontscheibe (32) aufweist, die das Streulicht (30) über nicht in den Überwachungsbereich (20) transmittierte Anteile des ausgesandten Lichtstrahls (16) erzeugt.

8. Sensor (10) nach einem der vorhergehenden Ansprüche,
wobei in dem Lichtpfad des ausgesandten Lichtstrahls (16) eine Streulichtstruktur (40) zur Erhöhung und/oder Umlenkung von Streulicht (30) angeordnet ist.

9. Sensor (10) nach Anspruch 8,
wobei die Streulichtstruktur (40) an einer Frontscheibe (32) des Sensors (10) angeordnet ist.

10. Sensor (10) nach Anspruch 8 oder 9,
wobei die Streulichtstruktur (40) mindestens eine Winkelcodierung in einer der Winkelmesseinheit (36) bekannten Winkelstellung bildet.

11. Sensor (10) nach einem der Ansprüche 8 bis 10,
wobei eine Vielzahl von Streulichtstrukturen (40) als Winkelcodierungen vorgesehen ist.

12. Sensor (10) nach einem der vorhergehenden Ansprüche,
wobei die Winkelmesseinheit (34, 36) einen zusätzlichen Winkelencoder aufweist.

13. Sensor (10) nach einem der vorhergehenden Ansprüche,
der eine Frontscheibe (32) aufweist, und wobei die Auswertungseinheit (36) dafür ausgebildet ist, aus dem Streulicht (30) eine Verschmutzung der Frontscheibe (32) zu erkennen.

14. Sensor (10) nach einem der vorhergehenden Ansprüche,
der als Sicherheitssensor ausgebildet ist und einen Sicherheitsausgang (38) aufweist, wobei die Auswertungseinheit (36) dafür ausgebildet ist zu bestimmen, ob sich ein Objekt in einem Schutzfeld innerhalb des Überwachungsbereichs (20) befindet, und daraufhin ein sicherheitsgerichtetes Abschaltsignal über den Sicherheitsausgang (38) auszugeben.

15. Verfahren zur Erfassung von Objekten in einem Überwachungsbereich (20), bei dem ein Lichtstrahl (16) ausgesandt, mit Hilfe einer beweglichen Ablenkeinheit (18) periodisch in den Überwachungsbereich (20) abgelenkt, aus dem von den Objekten remittierten oder reflektierten Lichtstrahl (22) ein Empfangssignal erzeugt und das Empfangssignal zur Erfassung der Objekte ausgewertet wird, wobei die jeweilige Winkelposition bestimmt wird, unter welcher der Lichtstrahl (16) ausgesandt wird,
**dadurch gekennzeichnet,**
**dass** die jeweilige Winkelstellung der Erfassung durch Auswertung (36) von Streulicht (30) bestimmt wird, welches der ausgesandte Lichtstrahl (16) insbesondere vor Eintritt in den Überwachungsbereich (20) erzeugt.

## Claims

1. An optoelectronic sensor (10), in particular laser scanner, for detecting objects in a monitoring region (20), having a light transmitter (12) for transmitting a light beam (16), a movable deflection unit (18) for periodically deflecting the light beam (16) in the monitoring region (20), an angle measuring unit (34) for determining an angular position of the deflection unit (18), a light receiver (26) for generating a received signal from the light beam (22) remitted or reflected by the objects, and an evaluation unit (36) which is configured to evaluate the received signal for detecting the objects,
**characterized in that** the angle measuring unit (34, 36) is configured to determine the respective angular position of the detection by evaluating scattered light (30) which the transmitted light beam (16) generates in the sensor (10).

2. The sensor (10) according to claim 1,
comprising a stray light receiver (34) for generating a stray light signal.

3. The sensor (10) according to claim 2,
wherein the scattered light receiver (34) does not participate in the movement of the deflection unit (18).

4. The sensor (10) according to one of the preceding claims,
wherein the angle measuring unit (34, 36) is configured to determine the angular position from a periodic course of the scattered light (30).

5. The sensor (10) according to claim 4,
wherein the angle measuring unit (34, 36) is configured to teach in the periodic course of the scattered light (30) as a reference.

6. The sensor (10) according to one of the preceding claims,
wherein the angle measuring unit (34, 36) is configured to determine an angular position from a characteristic, in particular extremum or zero crossing, of the scattered light (30).

7. The sensor (10) according to one of the preceding claims,
which has a front screen (32) which generates the scattered light (30) from components of the transmitted light beam (16) which are not transmitted into the monitoring region (20).

8. The sensor (10) according to one of the preceding claims,
wherein a scattered light structure (40) for increasing and/or deflecting scattered light (30) is arranged in the light path of the transmitted light beam (16).

9. The sensor (10) according to claim 8,
wherein the scattered light structure (40) is arranged on a front screen (32) of the sensor (10).

10. The sensor (10) according to claim 8 or 9,
wherein the scattered light structure (40) forms at least one angle encoding in an angular position known to the angle measuring unit (36).

11. The sensor (10) according to one of claims 8 to 10,
wherein a plurality of stray light structures (40) are provided as angle encodings.

12. The sensor (10) according to one of the preceding claims,
wherein the angle measuring unit (34, 36) comprises an additional angle encoding device.

13. The sensor (10) according to one of the preceding claims,
which has a front screen (32), and wherein the evaluation unit (36) is configured to detect contamination of the front screen (32) from the scattered light (30).

14. The sensor (10) according to one of the preceding claims,
which is configured as a safety sensor and has a safety output (38), wherein the evaluation unit (36) is configured to determine whether an object is located in a protective field within the monitored area (20), and then to output a safety-related switch-off signal via the safety output (38).

15. A method for detecting objects in a monitoring area (20), wherein a light beam (16) is transmitted, is deflected periodically in the monitoring area (20) by means of a movable deflection unit (18), a received signal is generated from the light beam (22) remitted or reflected by the objects, and the received signal is evaluated for detecting the objects, wherein the respective angular position where the light beam (16) is transmitted is determined,
**characterized in that** the respective angular position of the detection is determined by evaluation (36) of scattered light (30) which the transmitted light beam (16) generates in particular before entering the monitoring region (20).

## Revendications

1. Capteur optoélectronique (10), en particulier scanneur laser, pour détecter des objets dans une zone à surveiller (20), comportant un émetteur de lumière (12) pour émettre un rayon lumineux (16), une unité de déviation (18) mobile pour la déviation périodique du rayon lumineux (16) jusque dans la zone à surveiller (20), une unité de mesure d'angle (34, 36) pour déterminer une position angulaire de l'unité de déviation (18), un récepteur de lumière (26) pour générer un signal de réception à partir du rayon lumineux (22) réémis ou réfléchi par les objets, et une unité d'évaluation (36) réalisée pour évaluer le signal de réception pour détecter les objets,
**caractérisé en ce que**
l'unité de mesure d'angle (34, 36) est réalisée pour déterminer la position angulaire respective de la détection par évaluation de lumière diffusée (30) que génère le rayon lumineux émis (16) dans le capteur (10).

2. Capteur (10) selon la revendication 1,
comportant un récepteur de lumière diffusée (34) pour générer un signal de lumière diffusée.

3. Capteur (10) selon la revendication 2,
dans lequel le récepteur de lumière diffusée (34) ne participe pas au mouvement de l'unité de déviation (18).

4. Capteur (10) selon l'une des revendications précédentes,
dans lequel l'unité de mesure d'angle (34, 36) est réalisée pour déterminer la position angulaire à partir d'une évolution périodique de la lumière diffusée (30).

5. Capteur (10) selon la revendication 4,
dans lequel l'unité de mesure d'angle (34, 36) est réalisée pour apprendre comme référence l'évolution périodique de la lumière diffusée (30).

6. Capteur (10) selon l'une des revendications précédentes,
dans lequel l'unité de mesure d'angle (34, 36) est réalisée pour déterminer une position angulaire à partir d'une caractéristique, en particulier d'une valeur extrême ou d'un passage par zéro de la lumière diffusée (30).

7. Capteur (10) selon l'une des revendications précédentes,
comprenant une vitre frontale (32) qui génère la lumière diffusée (30) par des parts du rayon lumineux émis (16) qui ne sont pas transmises dans la zone à surveiller (20).

8. Capteur (10) selon l'une des revendications précédentes,
dans lequel une structure de lumière diffusée (40) est agencée dans le trajet optique du rayon lumineux émis (16) en vue d'augmenter et/ou de dévier la lumière diffusée (30).

9. Capteur (10) selon la revendication 8,
dans lequel la structure de lumière diffusée (40) est agencée sur une vitre frontale (32) du capteur (10).

10. Capteur (10) selon la revendication 8 ou 9,
dans lequel la structure de lumière diffusée (40) forme au moins un codage angulaire dans une position angulaire connue de l'unité de mesure d'angle (36).

11. Capteur (10) selon l'une des revendications 8 à 10,
dans lequel une multitude de structures de lumière diffusée (40) sont prévues en tant que codages angulaires.

12. Capteur (10) selon l'une des revendications précédentes,
dans lequel l'unité de mesure d'angle (34, 36) comprend un encodeur angulaire supplémentaire.

13. Capteur (10) selon l'une des revendications précédentes,
comportant une vitre frontale (32), l'unité d'évaluation (36) étant réalisée pour reconnaître un encrassement de la vitre frontale (32) à partir de la lumière diffusée (30).

14. Capteur (10) selon l'une des revendications précédentes,
réalisé sous forme de capteur de sécurité et comportant une sortie de sécurité (38), l'unité d'évaluation (36) étant réalisée pour déterminer si un objet se situe dans un champ de protection à l'intérieur de la zone à surveiller (20) et pour ensuite émettre un signal de coupure relatif à la sécurité via la sortie de sécurité (38).

15. Procédé pour détecter des objets dans une zone à surveiller (20), dans lequel un rayon lumineux (16) est émis qui est dévié périodiquement jusque dans la zone à surveiller (20) à l'aide d'une unité de déviation mobile (18), un signal de réception est généré à partir du rayon lumineux (22) réémis ou réfléchi par les objets, et le signal de réception est évalué pour détecter les objets, la position angulaire respective étant déterminée dans laquelle le rayon lumineux (16) est émis,
**caractérisé en ce que**
la position angulaire respective de la détection est déterminée par évaluation (36) de la lumière diffusée (30) que génère le rayon lumineux émis (16) en particulier avant d'entrer dans la zone à surveiller (20).
